# DEMANDE DE BREVET EUROPEEN

(11) **EP 1 298 811 A1**
(43) Date de publication de la demande: **02.04.2003**
(21) Numéro de dépôt: 01402497.0
(22) Date de dépôt: 27.09.2001
(51) Int. Cl.: H04B 1/69

(54) **Procédé et dispositif de détection des impulsions d'un signal incident impulsionnel du type à bande ultra large**

(71) Demandeur: STMicroelectronics S.A., 92120 Montrouge (FR); STMicroelectronics N.V., 1077 XX Amsterdam (NL)
(72) Inventeur: Helal, Didier, 74160 St. Julien en Genevois (FR); Arnaud, Thierry, 74330 Poisy (FR); Lebowsky, Fritz, Palo Alto, CA 94303 (US)
(74) Mandataire: Casalonga, Axel

(57) **Abrégé**

Le dispositif de détection comprend des moyens d'entrée ANT pour recevoir le signal incident et délivrer un signal de base, des moyens de prétraitement CMP recevant le signal de base et aptes à délivrer un signal intermédiaire SGI représentatif du signe du signal de base par rapport à une référence, des moyens d'échantillonnage MECH du signal intermédiaire aptes à délivrer un signal numérique SNM, et des moyens numériques de traitement aptes à effectuer une corrélation MCORR du signal numérique avec un signal de corrélation prédéterminé SCR.

## Description

L'invention concerne la technologie radio du type à bande ultra large (UWB « Ultra Wide Band » en langue anglaise) et plus particulièrement la détection des impulsions d'un signal incident impulsionnel du type à bande ultra large.

L'invention trouve des applications dans de nombreux domaines, tels que par exemple les réseaux locaux de communication sans fil, la régulation de trafic et la prévention de collisions, en particulier dans le domaine automobile, ....

La technologie du type à bande ultra large se distingue des technologies à bande étroite et spectre étalé, en ce sens que la largeur de bande du signal de type ultra large bande est typiquement comprise entre environ 25% et environ 100% de la fréquence centrale.

Par ailleurs, au lieu de transmettre une porteuse continue modulée avec de l'information ou avec de l'information combinée avec un code d'étalement, ce qui détermine la largeur de bande du signal, la technologie ultra large bande prévoit la transmission d'une série d'impulsions très étroites. Par exemple, ces impulsions peuvent prendre la forme d'un seul cycle, ou monocycle, ayant une largeur d'impulsion inférieure à 1 ns. Ces impulsions extrêmement courtes dans le domaine temporel, transformées dans le domaine fréquentiel, conduisent à l'obtention du spectre à bande ultra large caractéristique de la technologie UWB.

Dans la technologie UWB, l'information véhiculée sur le signal peut être codée par exemple par une modulation dite « de position d'impulsion » (PPM ;« Pulse Position Modulation » en langue anglaise). En d'autres termes, le codage d'information s'effectue en altérant l'instant d'émission des impulsions individuelles. Plus précisément, le train d'impulsions est émis à une fréquence de répétition pouvant aller jusqu'à plusieurs dizaines de MHz. Chaque impulsion est transmise dans une fenêtre de longueur prédéterminée, par exemple 50 ns. Par rapport à une position théorique d'émission, l'impulsion est alors en avance ou en retard, ce qui permet de coder un « 0 » ou un « 1 ». Il est également possible de coder plus de deux valeurs en utilisant plus de deux positions décalées par rapport à la position de référence. Il est encore possible de superposer à cette modulation en position, une modulation du type BPSK.

A la réception du signal ainsi transmis, il est donc nécessaire de détecter ces impulsions pour, le cas échéant, déterminer leur position si une modulation du type PPM a été utilisée.

Jusqu'à maintenant, cette détection des impulsions s'effectue en utilisant un corrélateur analogique, ce qui nécessite une réalisation matérielle relativement complexe.

L'invention vise à apporter une solution à ce problème.

L'invention propose un dispositif de détection des impulsions d'un signal incident impulsionnel du type à bande ultra large, comprenant des moyens d'entrée, par exemple une antenne, pour recevoir le signal incident et délivrer un signal de base, des moyens de prétraitement recevant le signal de base et aptes à délivrer un signal intermédiaire représentatif du signe du signal de base par rapport à une référence, par exemple la tension nulle, des moyens d'échantillonnage du signal intermédiaire aptes à délivrer un signal numérique, et des moyens numériques de traitement aptes à effectuer une corrélation du signal numérique avec un signal de corrélation prédéterminé.

En d'autres termes, l'invention permet de détecter une impulsion de type ultra large bande au moyen du signe du signal reçu, échantillonné puis corrélé avec un signal numérique de corrélation prédéterminé. Cette détection pourra permettre dans certaines applications d'effectuer des traitements de synchronisation, d'estimation de canal, de décodage d'un signal UWB véhiculant des informations codées.

Outre le fait d'utiliser un signal binaire représentatif du signe du signal incident pour la détection des impulsions, l'invention prévoit d'effectuer tous les traitements, et notamment la détection des impulsions, de façon numérique, ce qui simplifie la réalisation matérielle du dispositif.

Par ailleurs, dans l'art antérieur, qui utilise une solution analogique, soit l'information située en dehors des instants de capture est perdue (dans le cas par exemple d'une modulation de position), soit les impulsions son détectées globalement (dans le cas par exemple d'une modulation BPSK). Par contre, selon l'invention, il est possible d'effectuer un échantillonnage continu du signe du signal avec une résolution plus fine que la largeur des impulsions et de choisir les meilleurs instants pour effectuer les traitements numériques, et notamment la corrélation.

De plus, dans le domaine des réseaux de communication sans fil, les terminaux utilisent généralement des récepteurs Rake, selon une dénomination bien connue de l'homme du métier, qui comportent plusieurs « doigts » (ou « fingers ») affectés aux différents trajets d'un canal de transmission multi-trajets.

Or, lorsqu'une solution analogique est utilisée pour la détection des impulsions UWB, il est alors nécessaire de dupliquer des parties de la chaîne de réception autant de fois qu'il y a de doigts.

Par contre, selon l'invention, l'échantillonnage continu du signe du signal permet une observation continue du signal et il est alors possible de détecter des trajets multiples dans un environnement multi-trajets sans effectuer de duplication de la chaîne de réception.

Selon un mode de réalisation de l'invention, les moyens d'échantillonnage comportent des moyens de conversion série/parallèle aptes à délivrer successivement à une fréquence de délivrance prédéterminée Fe, des groupes de N échantillons en parallèle, ce qui correspond à une fréquence effective d'échantillonnage du signal intermédiaire égale à N.Fe.

A titre d'exemple, lorsque les impulsions ont une fréquence centrale de quelques GHz, la fréquence effective d'échantillonnage peut être supérieure à 10 GHz. Et, le fait d'utiliser des moyens de conversion série/parallèle permet de travailler avec un signal d'horloge à la fréquence Fe, par exemple quelques centaines de MHz, et d'obtenir une fréquence effective d'échantillonnage de l'ordre de 20 GHz, voire plus, ce que les convertisseurs analogique/numérique actuels ne peuvent pas réaliser. En pratique, N pourra être une puissance entière de 2, pouvant être par exemple égale à 7.

Les moyens de conversion série/parallèle comportent avantageusement :
- un circuit d'horloge programmable recevant un signal d'horloge de base ayant la fréquence Fe et délivrant N signaux d'horloge élémentaires ayant tous la même fréquence Fe mais mutuellement temporellement décalés de 1/N.Fe,
- N bascules recevant en entrée le signal intermédiaire, respectivement commandées par les N signaux d'horloge élémentaires, et délivrant respectivement les N échantillons, et
- un registre de sortie commandé par le signal d'horloge de base pour stocker les N échantillons délivrés par les N bascules et les délivrer en parallèle à la fréquence de délivrance.

Le circuit d'horloge programmable comprend de préférence une boucle numérique à verrouillage de phase comportant un oscillateur programmable en anneau délivrant les N signaux d'horloge élémentaires et commandé à partir d'un circuit de commande recevant les sorties respectives de N bascules, ces N bascules recevant le signal d'horloge de base et étant respectivement commandées par les N signaux d'horloge élémentaires.

L'utilisation d'une boucle numérique à verrouillage de phase en combinaison avec les moyens de conversion série/parallèle, permet d'obtenir une précision meilleure que quelques dizaines de picosecondes pour les déphasages mutuels (décalages temporels mutuels) des N signaux d'horloge élémentaires.

Ainsi, selon l'invention, il est possible de détecter l'instant d'arrivée d'une impulsion avec une résolution égale à la précision des N signaux d'horloge élémentaires.

Les moyens d'échantillonnage, et notamment la boucle numérique à verrouillage de phase, sont réalisés avantageusement en technologie CMOS, ce qui permet notamment de pouvoir placer les moyens d'échantillonnage et les moyens numériques de traitement dans un mode de veille au cours d'intervalles temporels prédéterminés. En d'autres termes, on peut mettre facilement le système en marche/arrêt, ce qui permet des économies d'énergie importantes.

Comme indiqué ci-avant, la détection des impulsions s'effectue par une corrélation du signal numérique délivré par les moyens d'échantillonnage, avec un signal de corrélation prédéterminé.

Ce signal de corrélation peut être le signal numérique lui-même. En d'autres termes, on effectue alors une autocorrélation du signal numérique. Ceci permet de détecter des impulsions de forme à priori inconnue.

Ceci étant, lorsque le signal incident résulte de la transmission d'un signal impulsionnel initial comportant des impulsions de forme théorique connue, le signal de corrélation est alors avantageusement un signal numérique de référence correspondant à un signal de base théorique issu de la réception d'une impulsion théorique ayant ladite forme connue.

En d'autres termes, on peut alors détecter selon l'invention des impulsions de forme connue en'utilisant une corrélation avec une référence correspondant à la réponse théorique du système à l'impulsion reçue.

Lorsque le signal reçu comporte un symbole formé de plusieurs impulsions, le signal de corrélation peut être alors avantageusement la réponse théorique du système au symbole reçu.

Quel que soit le signal de corrélation utilisé, il est particulièrement avantageux, notamment pour s'affranchir du bruit, que les moyens numériques de traitement effectuent en outre une série d'intégrations cohérentes du signal numérique.

L'invention a également pour objet un procédé de détection des impulsions d'un signal incident impulsionnel du type à bande ultra large, comprenant une réception du signal incident de façon à obtenir un signal de base, un échantillonnage d'un signal intermédiaire représentatif du signe du signal de base de façon à obtenir un signal numérique, et un traitement numérique du signal numérique comportant une corrélation du signal numérique avec un signal de corrélation prédéterminé.

Selon un mode de mise en oeuvre, l'échantillonnage comporte une conversion série/parallèle de façon à délivrer successivement à une fréquence de délivrance prédéterminée Fe, des groupes de N échantillons en parallèle, ce qui correspond à une fréquence effective d'échantillonnage du signal intermédiaire égale à N.Fe.

L'invention a encore pour objet un terminal d'un système de transmission sans fil, incorporant un dispositif de détection tel que défini ci-avant.

D'autres avantages et caractéristiques de l'invention apparaîtront à l'examen de la description détaillée de modes de réalisation et de mise en oeuvre, nullement limitatifs, et des dessins annexés, sur lesquels :
- la figure 1 illustre schématiquement un signal incident du type à bande ultra large ;
- la figure 2 illustre plus en détail l'une des impulsions du signal incident de la figure 1 ;
- la figure 3 illustre plus en détail l'une des impulsions du signal de base résultant de la réception du signal incident par le système de réception ;
- la figure 4 illustre schématiquement un mode de réalisation d'un dispositif de détection selon l'invention ;
- les figures 5 et 6 illustrent plus en détail mais toujours schématiquement un mode de réalisation des moyens d'échantillonnage du dispositif de la figure 4 ;
- la figure 7 représente un chronogramme temporel schématique des différents signaux d'horloge utilisés dans les moyens d'échantillonnage ;
- la figure 8 illustre un premier mode de réalisation et de mise en oeuvre de l'invention, utilisant un signal de corrélation de référence tel que par exemple celui illustré sur la figure 9 ;
- la figure 10 illustre schématiquement un deuxième mode de réalisation et de mise en oeuvre de l'invention, utilisant également un signal de corrélation de référence tel que celui illustré sur la figure 9 ; et
- les figures 11 et 12 illustrent deux autres modes de réalisation et de mise en oeuvre de l'invention.

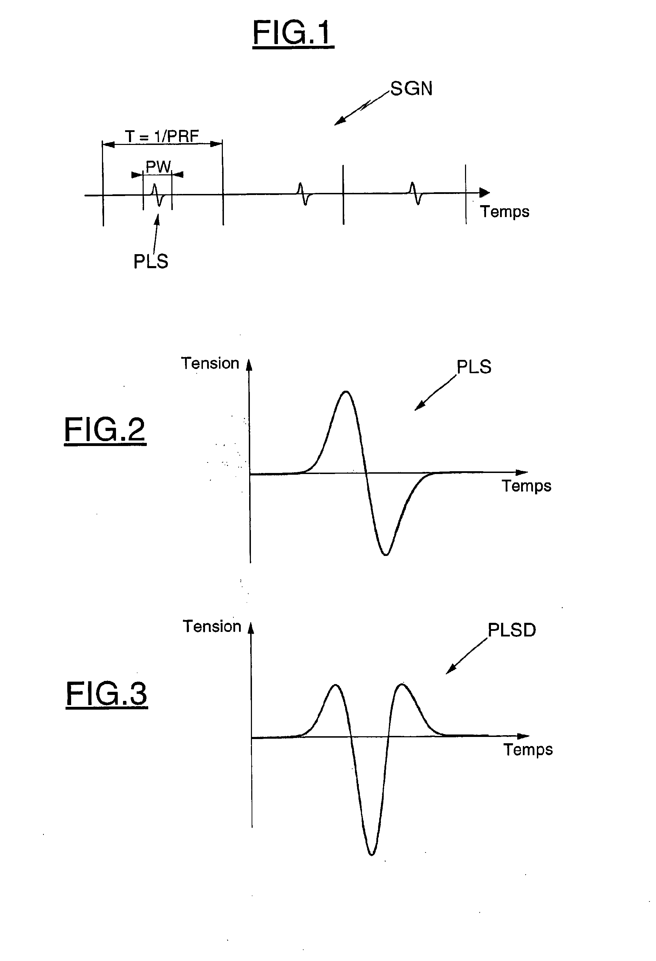

Sur la figure 1, la référence SGN désigne un signal impulsionnel initial du type à bande ultra large, comportant des impulsions PLS de forme théorique connue. Plus précisément, ces impulsions PLS ont une largeur temporelle prédéterminée PW, par exemple typiquement inférieure à 1 ns, par exemple de l'ordre de 360 picosecondes. Les impulsions successives PLS sont respectivement contenues dans des fenêtres temporelles successives de longueur T égale à l'inverse de la fréquence de répétition des impulsions (« Pulse Répétition Frequency » PRF selon une dénomination anglosaxonne). A titre indicatif, la longueur T de chaque fenêtre temporelle est par exemple égale à 50 ns. La position de chaque impulsion dans une fenêtre temporelle peut varier d'une fenêtre à l'autre en fonction d'un code par exemple pseudo-aléatoire. En outre, lorsque le signal véhicule des informations codées avec une modulation de position (modulation PPM), l'impulsion peut être légèrement en avance ou légèrement en retard par rapport à la position de référence de l'impulsion dans la fenêtre, en fonction de la valeur « 0 » ou « 1 » de l'information transmise.

Les impulsions PLS possèdent des caractéristiques d'une impulsion du type à bande ultra large en ce sens que le rapport de la largeur de bande de l'impulsion à mi-puissance sur la fréquence centrale est supérieur à 1/4. A titre indicatif, la fréquence centrale d'une impulsion peut varier entre 2 et 4 GHz.

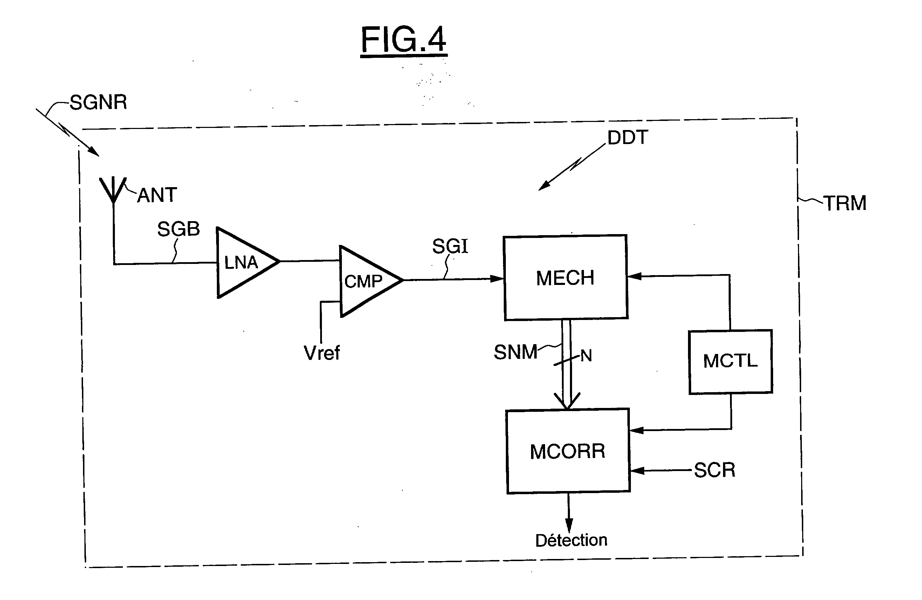

Le dispositif de détection DDT selon l'invention, dont un mode de réalisation est illustré sur la figure 4, va permettre de détecter la présence ou l'absence d'impulsion dans le signal, et dans le cas où une impulsion est présente, son instant d'arrivée et sa polarité. Ce dispositif peut par exemple être incorporé dans un terminal TRM d'un système de communication sans fil du type réseau local.

Plus précisément, ce dispositif DDT comporte, dans l'application particulière mais non limitative qui est illustrée ici, une antenne ANT pour recevoir le signal incident SGNR résultant de la transmission du signal SGN sur un canal de transmission qui peut être multi-trajets.

L'antenne ANT forme des moyens d'entrée qui délivrent un signal de base SGB à partir du signal incident SGNR. Le signal de base SGB est également un signal impulsionnel du type à bande ultra large. Cependant, après passage dans l'antenne ANT, la forme des impulsions PLSD formant ce signal SGB est illustrée sur la figure 3, et elle diffère de la forme des impulsions PLS illustrée sur la figure 2.

En d'autres termes, l'impulsion PLSD est la réponse théorique du système à la réception d'une impulsion PLS. Bien entendu, cette réponse théorique varie en fonction des caractéristiques des moyens de réception.

Le signal de base SGB est ensuite amplifié dans des moyens d'amplification à faible bruit LNA. Le signal de sortie de l'amplificateur LNA est ensuite comparé à une tension de référence Vref (par exemple la valeur zéro) dans un comparateur CMP.

Le comparateur CMP délivre alors un signal intermédiaire SGI représentatif du signe du signal de base SGB, et par conséquent du signe du signal incident, par rapport à la référence Vref.

Le signal intermédiaire SGI va ensuite être échantillonné dans des moyens d'échantillonnage MECH. Ces moyens d'échantillonnage MECH vont, comme on va le voir plus en détail ci-après, délivrer des groupes successifs de N échantillons. Tous ces échantillons vont ensuite être traités dans des moyens numériques de traitement comportant pour l'essentiel des moyens de corrélation MCORR aptes à effectuer une corrélation du signal numérique SNM délivrée par les moyens d'échantillonnage avec un signal de corrélation numérique prédéterminé SCR. Le résultat de cette corrélation va permettre de détecter la présence éventuelle d'une impulsion.

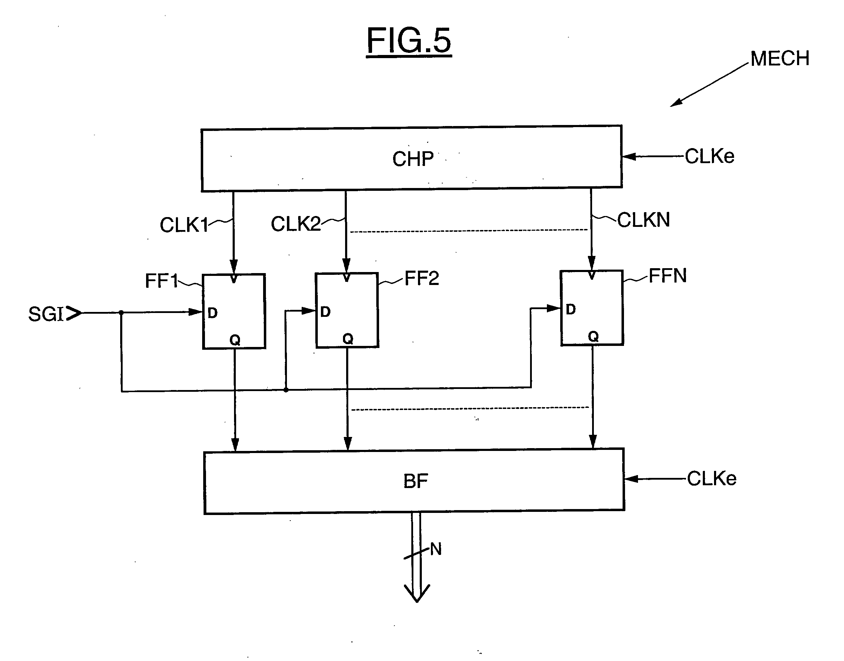

La fréquence centrale des impulsions du signal pouvant être de l'ordre de plusieurs GHz, il est nécessaire que la fréquence d'échantillonnage du signal numérique soit très élevée, c'est-à-dire supérieure par exemple à 10 GHz. Une façon particulièrement simple et facile à réaliser, pour échantillonner un signal à 10 GHz, peut consister à utiliser des moyens de conversion série/parallèle tels que ceux illustrés sur la figure 5.

Plus précisément, ces moyens de conversion série/parallèle vont délivrer successivement à une fréquence de délivrance prédéterminée Fe, par exemple de l'ordre de 200 MHz, des groupes de N échantillons en parallèle, ce qui va correspondre à une fréquence effective d'échantillonnage du signal intermédiaire égale à N.Fe. Ainsi, N peut être par exemple choisi égal à 2^{m}, m pouvant être égal à 7 par exemple, ce qui conduit alors à l'obtention de groupes de 128 échantillons. La fréquence effective d'échantillonnage sera alors supérieure à 20 GHz.

Matériellement, ces moyens de conversion série/parallèle comportent un circuit d'horloge programmable CHP recevant un signal d'horloge de base CLKe ayant la fréquence Fe et délivrant N signaux d'horloge élémentaires CLK1-CLKN ayant tous la même fréquence Fe mais mutuellement temporellement décalés de 1/N.Fe. Ainsi, à titre indicatif, ces signaux d'horloge pourront être mutuellement temporellement décalés de l'ordre de 50 picosecondes, par exemple.

Les moyens de conversion série/parallèle comportent également N bascules D, respectivement référencées FF1-FFN. Ces bascules sont respectivement commandées par les N signaux d'horloge élémentaires CLK1-CLKN et elles reçoivent toutes en entrée le signal intermédiaire SGI issu du comparateur CMP.

Au rythme des fronts montants successifs des différents signaux d'horloge élémentaires CLK1-CLKN, le signal intermédiaire SGI va donc être échantillonné et les N échantillons successifs vont être stockés dans un registre de sortie BF commandé par le signal d'horloge de base CLKe. A chaque front montant de ce signal d'horloge de base CLKe (les fronts montants étant espacés d'une durée Te représentant la période de ce signal d'horloge de base), les N échantillons vont être délivrés en parallèle.

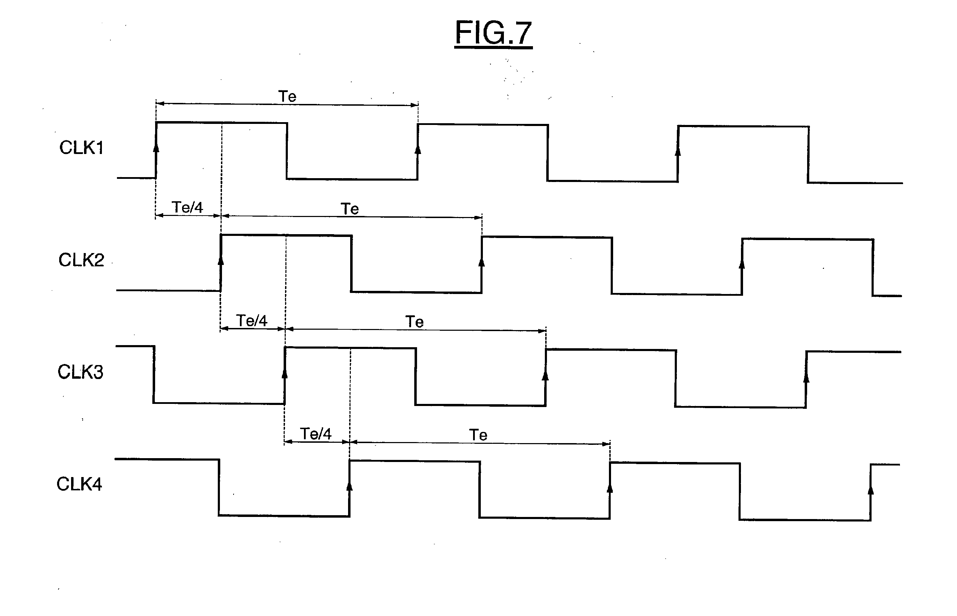

A titre d'exemple, on peut se référer à la figure 7, sur laquelle on a représenté à des fins de simplification uniquement quatre signaux d'horloge élémentaires CLK1-CLK4 (correspondant à N=4). En fait, comme on le voit sur la figure 7, le signal d'horloge de base CLKe est l'un des signaux d'horloge élémentaires, par exemple le signal CLK1.

En pratique, le circuit d'horloge programmable CHP peut être composé d'une horloge, par exemple un quartz, et d'un certain nombre d'éléments de retard montés en série à la sortie de l'horloge. A cet égard, l'homme du métier pourra éventuellement se référer à la demande de brevet européen n° 0 843 418.

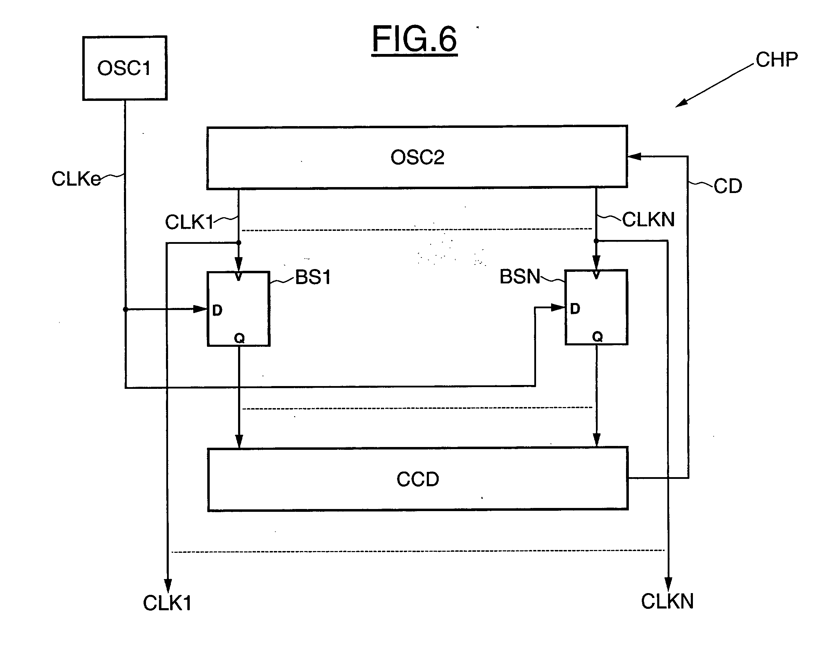

L'une des difficultés de cet échantillonnage à très haute fréquence, réside dans le fait qu'il convient de délivrer les signaux d'horloge élémentaires avec une précision (« jitter » en langue anglaise) très faible, par exemple de l'ordre de quelques picosecondes. C'est la raison pour laquelle il est alors avantageux que le circuit d'horloge programmable CHP comprenne une boucle numérique à verrouillage de phase comportant (figure 6) par exemple un oscillateur programmable en anneau OSC2, délivrant les N signaux d'horloge élémentaires CLK1-CLKN. Cet oscillateur en anneau est commandé à partir d'un circuit de commande CCD, recevant les sorties respectives de N bascules BS1-BSN. Ces N bascules sont respectivement commandées par les N signaux d'horloge élémentaires CLK1-CLKN et reçoivent sur leur entrée D le signal d'horloge de base CLKe issu par exemple d'un oscillateur classique à quartz OSC1.

L'homme du métier pourra, à cet égard, se référer, si nécessaire, au brevet américain n° 6 208 182, en ce qui concerne notamment la commande de l'oscillateur en anneau. On en rappelle ici cependant les principes généraux. Le circuit de commande CCD comporte des moyens pour comparer des échantillons deux à deux, de façon à déterminer si une transition d'état s'est produite dans un intervalle temporel séparant les deux échantillons, cette comparaison étant effectuée sur au moins deux cycles, consécutifs ou non, de l'oscillateur en anneau. Cette comparaison est effectuée de sorte que :
- si, durant le second cycle, une transition d'état comparable est détectée dans le même intervalle, la commande de l'oscillateur en anneau n'est pas modifiée,
- si, durant le second cycle, une transition d'état comparable est détectée dans un intervalle ultérieur, la période de l'oscillateur en anneau est diminuée, et
- si, durant le second cycle, une transition d'état comparable est détectée dans un intervalle antérieur, la période de l'oscillateur en anneau est augmentée.

Comme indiqué ci-avant, la détection de la présence éventuelle d'une impulsion va s'effectuer par une corrélation numérique avec un signal de corrélation de référence SCR.

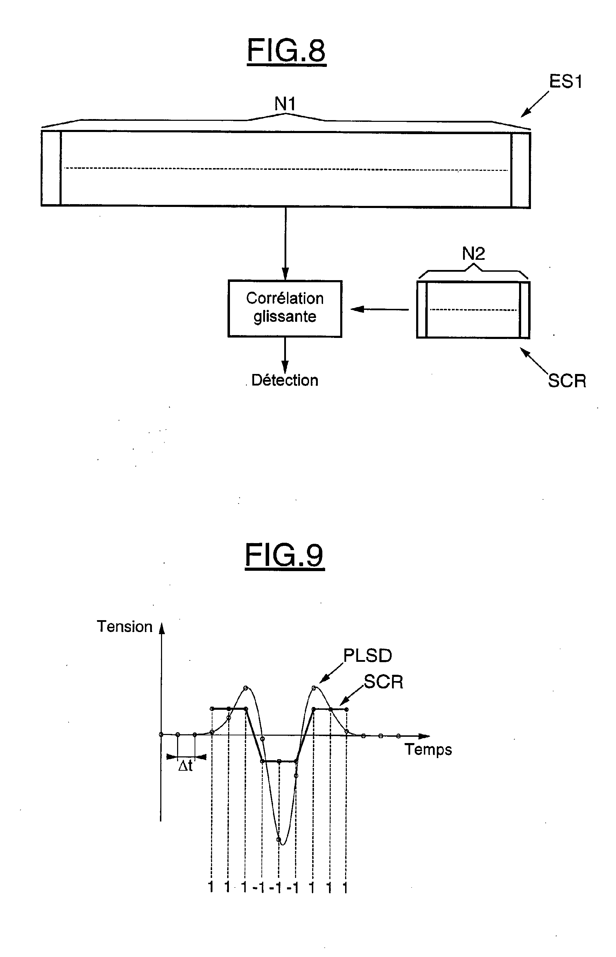

Dans l'exemple qui a été décrit, et puisque les impulsions ont une forme connue, le signal de corrélation de référence est un signal numérique de référence correspondant à la forme d'une impulsion après passage dans les moyens d'entrée. Plus précisément, comme illustré sur la figure 9, le signal numérique de référence SCR est un profil de neuf échantillons dont la forme générale correspond à la forme générale d'une impulsion PLSD. Chaque échantillon est séparé temporellement d'une distance Δt=1/N.Fe. Le signal de référence SCR est donc, dans le cas présent, un bloc de neuf échantillons ayant respectivement pour valeur 111-1-1-1-111.

Les moyens de corrélation MCORR vont alors effectuer une corrélation glissante entre les échantillons du signal numérique délivrés par les moyens d'échantillonnage et les N2 (N2=9) échantillons de référence.

En pratique, N2 est largement inférieur à N. Les moyens de corrélation vont donc tout d'abord effectuer une première corrélation (qui est en fait une multiplication terme à terme) entre les N2 échantillons de référence et les N2 premiers échantillons du groupe de N échantillons délivrés par les moyens d'échantillonnage. Ceci va donner une première valeur de corrélation. Puis, tous les Δt, les N2 échantillons de référence vont se décaler d'un échantillon de façon à obtenir une nouvelle valeur de corrélation.

Et, cette corrélation glissante va s'effectuer sur un ensemble EST de N1 échantillons du signal numérique (figure 8), la valeur N1 correspondant en nombre d'échantillons à la longueur T d'une fenêtre du signal de base au sein de laquelle est susceptible de se trouver une impulsion.

Les moyens de traitement numérique vont alors détecter le maximum parmi les valeurs de corrélation, ce qui va permettre de détecter la présence et l'instant d'arrivée de l'impulsion. Par ailleurs, selon le signe de cette valeur maximale, on pourra déterminer la polarité de l'impulsion reçue. En variante, il est possible de détecter uniquement le passage par « 0 » de l'ensemble des valeurs de corrélation.

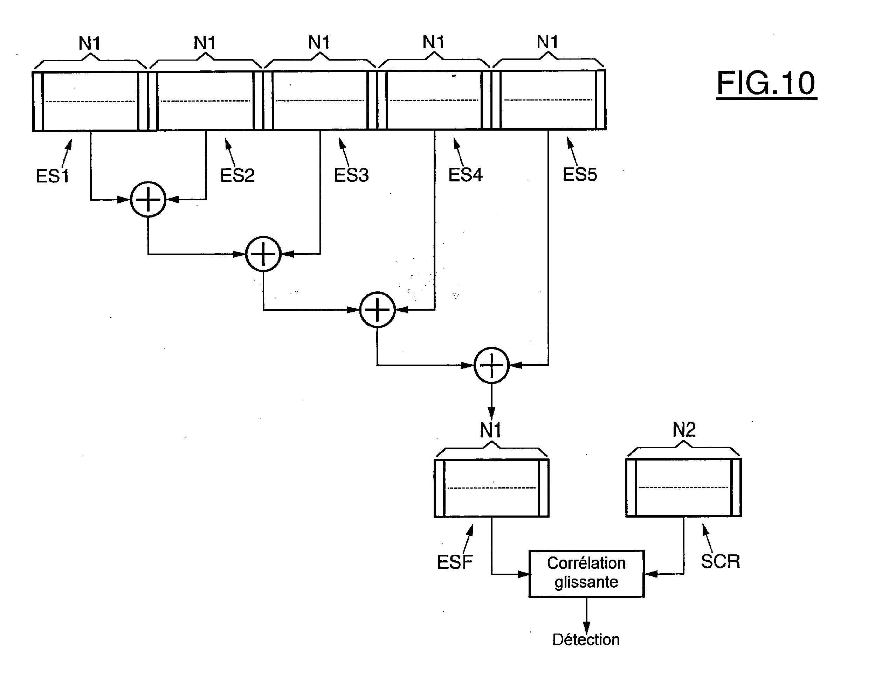

Ceci étant, en pratique, le signal SGNR qui arrive sur l'antenne est bruité. C'est la raison pour laquelle il est préférable que les moyens numériques de traitement effectuent en outre une série d'intégrations cohérentes du signal numérique. De telles intégrations cohérentes sont parfaitement connues en soi par l'homme du métier. En pratique, comme illustré sur la figure 10, elles peuvent consister à effectuer des sommations d'échantillons homologues de plusieurs ensembles successifs de N1 échantillons ES1-ES5, de façon à obtenir en final un ensemble final ESF de N1 échantillons sur lequel on va effectuer la corrélation glissante en utilisant les N2 échantillons de référence. Dans le cas où les impulsions successives seraient espacées de façon irrégulière dans le temps (par exemple selon un code connu), les sommations d'échantillons peuvent tenir compte du décalage temporel entre les impulsions.

Dans l'exemple qui vient d'être décrit, on a supposé que les impulsions du signal incident étaient de forme connue. Ceci étant, l'invention permet également de détecter la présence d'impulsions d'un signal impulsionnel de type ultra large bande, quelle que soit la forme des impulsions même si les impulsions sont à priori de forme inconnue. Dans ce cas, le signal de corrélation de référence SCR sera le signal numérique lui-même. En d'autres termes, les moyens de corrélation MCORR effectueront une autocorrélation du signal numérique délivré par les moyens d'échantillonnage. Et, la détection du pic de corrélation permettra de détecter la présence éventuelle des impulsions et l'écart temporel entre les impulsions.

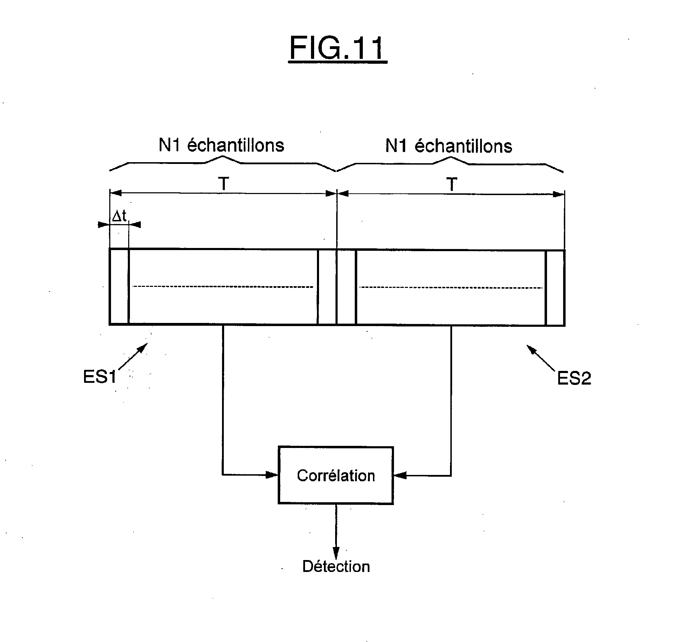

En pratique, comme illustré sur la figure 11, cette autocorrélation va s'effectuer sur deux ensembles consécutifs ES1 et ES2 de N1 échantillons du signal numérique. On rappelle ici que ces N1 échantillons correspondent à une longueur T de la fenêtre du signal à l'intérieur de laquelle est susceptible de se situer l'impulsion. Par ailleurs, chaque échantillon est espacé de la distance Δt.

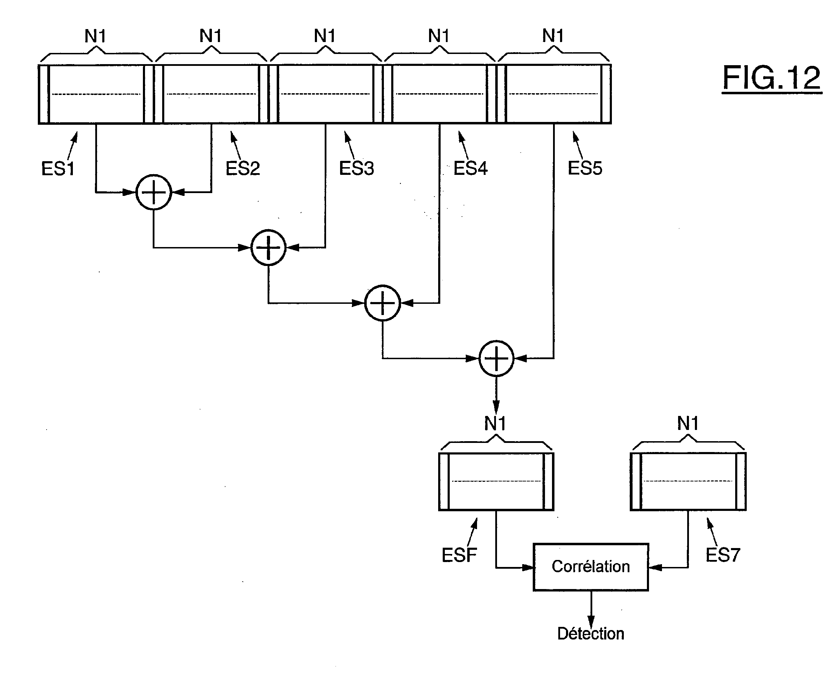

Là encore, comme illustré sur la figure 12, il est préférable pour tenir compte du bruit, d'effectuer une série d'intégrations cohérentes du signal numérique. Celles-ci peuvent s'effectuer sur un nombre consécutif d'ensembles ES1-ES5 de N1 échantillons de façon à obtenir un ensemble final ESF de N1 échantillons que l'on va corréler avec un autre ensemble ES7 de N1 échantillons.

Matériellement, les moyens d'échantillonnage et les moyens de traitement numérique peuvent être réalisés en technologie CMOS, ce qui est appréciable sur le plan des coûts de fabrication. Ceci permet également de prévoir des moyens de contrôle MCTL (figure 4) qui pourront placer les moyens d'échantillonnage et/ou les moyens de corrélation dans un état de veille, par exemple pendant des périodes temporelles où le système sait qu'il ne reçoit pas d'impulsion ou bien pendant des périodes où le rapport signal/bruit n'est pas optimal. Ceci permet une économie d'énergie appréciable.

Par ailleurs, les moyens de corrélation peuvent être réalisés par plusieurs corrélateurs en parallèle traitant en parallèle plusieurs groupes de N échantillons, de façon à obtenir une vitesse de traitement compatible avec la fréquence effective d'échantillonnage égale à N.Fe.

## Revendications

1. Procédé de détection des impulsions d'un signal incident impulsionnel du type à bande ultra large, comprenant une réception du signal incident (SGNR) de façon à obtenir un signal de base (SGB), un échantillonnage d'un signal intermédiaire (SGI) représentatif du signe du signal de base de façon à obtenir un signal numérique (SNM), et un traitement numérique du signal numérique comportant une corrélation du signal numérique (SNM) avec un signal de corrélation prédéterminé (SCR).

2. Procédé selon la revendication 1, **caractérisé par le fait que** l'échantillonnage comporte une conversion série/parallèle de façon à délivrer successivement à une fréquence de délivrance prédéterminée Fe, des groupes de N échantillons en parallèle, ce qui correspond à une fréquence effective d'échantillonnage du signal intermédiaire (SGI) égale à N.Fe.

3. Procédé selon la revendication 2, **caractérisé par le fait que** les impulsions (PLS) ont une fréquence centrale de quelques GHz, et **par le fait que** la fréquence effective d'échantillonnage est supérieure à 10GHz.

4. Procédé selon la revendication 3, **caractérisé par le fait que** N est une puissance entière de 2, et **par le fait que** la fréquence effective d'échantillonnage est de l'ordre de 20GHz, la fréquence de délivrance Fe étant de l'ordre de 200MHz.

5. Procédé selon l'une des revendications précédentes, **caractérisé par le fait que** le signal de corrélation (SCR) est le signal numérique.

6. Procédé selon la revendication 5, **caractérisé par le fait que** les impulsions du signal incident sont respectivement contenues dans des fenêtres temporelles successives de longueur T, cette longueur correspondant à une fenêtre de N1 échantillons du signal numérique échantillonné, et **par le fait que** traitement numérique comporte une corrélation entre un premier ensemble de N1 échantillons du signal numérique (SNM) et un deuxième ensemble de N1 échantillons du signal numérique (SNM).

7. Procédé selon l'une des revendications 1 à 4, **caractérisé par le fait que** le signal incident résulte de la transmission d'un signal impulsionnel initial comportant des impulsions de forme théorique connue, **par le fait que** le signal de corrélation (SCR) est un signal de corrélation de référence correspondant à un signal de base théorique issu de la réception d'une impulsion théorique (PLSD) ayant ladite forme théorique connue.

8. Procédé selon la revendication 7, **caractérisé par le fait que** le signal numérique de référence (SCR) est formé de N2 échantillons de référence, et **par le fait que** traitement numérique comporte une corrélation glissante entre les échantillons du signal numérique et les N2 échantillons de référence.

9. Procédé selon l'une des revendications précédentes, **caractérisé par le fait que** le traitement numérique comporte en outre une série d'intégrations cohérentes du signal numérique.

10. Dispositif de détection des impulsions d'un signal incident impulsionnel du type à bande ultra large, comprenant des moyens d'entrée (ANT) pour recevoir le signal incident et délivrer un signal de base, des moyens de prétraitement (CMP) recevant le signal de base et aptes à délivrer un signal intermédiaire (SGI) représentatif du signe du signal de base par rapport à une référence, des moyens d'échantillonnage (MECH) du signal intermédiaire aptes à délivrer un signal numérique (SNM), et des moyens numériques de traitement aptes à effectuer une corrélation (MCORR) du signal numérique avec un signal de corrélation prédéterminé (SCR).

11. Dispositif selon la revendication 10, **caractérisé par le fait que** les moyens d'échantillonnage (MECH) comportent des moyens de conversion série/parallèle aptes à délivrer successivement à une fréquence de délivrance prédéterminée Fe, des groupes de N échantillons en parallèle, ce qui correspond à une fréquence effective d'échantillonnage du signal intermédiaire égale à N.Fe.

12. Dispositif selon la revendication 11, **caractérisé par le fait que** les moyens de conversion série/parallèle comportent
- un circuit d'horloge programmable (CHP) recevant un signal d'horloge de base (CLKe) ayant la fréquence Fe et délivrant N signaux d'horloge élémentaires (CLK1-CLKN) ayant tous la même fréquence Fe mais mutuellement temporellement décalés de 1/N.Fe,
- N bascules (FF1-FFN) recevant toutes en entrée le signal intermédiaire, respectivement commandées par les N signaux d'horloge élémentaires, et délivrant respectivement les N échantillons,
- un registre de sortie (BF) commandé par le signal d'horloge de base pour stocker les N échantillons délivrés par les N bascules et les délivrer en parallèle à la fréquence de délivrance.

13. Dispositif selon la revendication 12, **caractérisé par le fait que** le circuit d'horloge programmable (CHP) comprend une boucle numérique à verrouillage de phase comportant un oscillateur programmable en anneau (OSC2) délivrant les N signaux d'horloge élémentaires et commandé à partir d'un circuit de commande (CCD) recevant les sorties respectives de N bascules (BS1-BSN) recevant toutes le signal d'horloge de base (CLKe) et respectivement commandées par les N signaux d'horloge élémentaires.

14. Dispositif selon l'une des revendications 11 à 13, **caractérisé par le fait que** les impulsions ont une fréquence centrale de quelques GHz, et **par le fait que** la fréquence effective d'échantillonnage est supérieure à 10GHz.

15. Dispositif selon la revendication 14, **caractérisé par le fait que** N est une puissance entière de 2, et **par le fait que** la fréquence effective d'échantillonnage est de l'ordre de 20GHz, la fréquence de délivrance Fe étant de l'ordre de 200MHz..

16. Dispositif selon l'une des revendications 10 à 15, **caractérisé par le fait que** les moyens d'échantillonnage (MECH) sont réalisés en technologie CMOS.

17. Dispositif selon la revendication 16, **caractérisé par le fait qu'**il comporte des moyens de contrôle (MCTL) aptes à placer les moyens d'échantillonnage et les moyens numériques de traitement dans un mode de veille au cours d'intervalles temporels prédéterminés.

18. Dispositif selon l'une des revendications 10 à 17, **caractérisé par le fait que** le signal de corrélation (SCR) est le signal numérique.

19. Dispositif selon la revendication 18, **caractérisé par le fait que** les impulsions du signal incident sont respectivement contenues dans des fenêtres temporelles successives de longueur T, cette longueur correspondant à une fenêtre de N1 échantillons du signal numérique délivré par les moyens d'échantillonnage, et **par le fait que** les moyens numériques de traitement effectuent une corrélation entre un premier ensemble de N1 échantillons du signal numérique (SNM) et un deuxième ensemble de N1 échantillons du signal numérique (SNM).

20. Dispositif selon l'une des revendications 10 à 17, **caractérisé par le fait que** le signal incident résulte de la transmission d'un signal impulsionnel initial comportant des impulsions de forme théorique connue, **par le fait que** le signal de corrélation est un signal de corrélation de référence correspondant à un signal de base théorique issu de la réception d'une impulsion théorique (PLSD) ayant ladite forme théorique connue.

21. Dispositif selon la revendication 20, **caractérisé par le fait que** le signal numérique de référence (SCR) est formé de N2 échantillons de référence, et **par le fait que** les moyens numériques de traitement effectuent une corrélation glissante entre les échantillons du signal numérique délivrés par les moyens d'échantillonnage et les N2 échantillons de référence.

22. Dispositif selon l'une des revendications 18 à 21, **caractérisé par le fait que** les moyens numériques de traitement effectuent en outre une série d'intégrations cohérentes du signal numérique.

23. Terminal d'un système de transmission sans fil, **caractérisé par le fait qu'**il incorpore un dispositif selon l'une des revendications 10 à 22.
